# EUROPÄISCHE PATENTANMELDUNG

(11) **EP 0 992 938 A2**
(43) Veröffentlichungstag der Anmeldung: **12.04.2000**
(21) Anmeldenummer: 99119675.9
(22) Anmeldetag: 05.10.1999
(51) Int. Cl.: G06K 19/067, G06F 15/02, G06F 17/60

(54) **Elektronisches Handgerät**

(30) Priorität: 05.10.1998 DE 19845590
(71) Anmelder: Yassouridis, Alexander, Dr., 85774 Unterföhring (DE)
(72) Erfinder: Yassouridis, Alexander, Dr., 85774 Unterföhring (DE)
(74) Vertreter: WILHELMS, KILIAN & PARTNER Patentanwälte

(57) **Zusammenfassung**

Handgerät zum Aufzeichnen und Übermitteln von Kreditkartendaten allein oder in Kombination mit einem Bankautomaten oder einer Bezahlkasse eines Kaufhauses, wobei bevorzugt das Handgerät in einem Handy integriert ist.

## Beschreibung

Die Erfindung betrifft ein neuartiges Handgerät, ggf. als Modul oder als integraler Bestandteil eines anderen Handgeräts, z. B. eines mobilem Telefons (Handy), zum Aufzeichnen und Übermitteln von Daten, insbesondere von personenbezogenen Daten, sowie eine Anordnung, die das erfindungsgemäße Handgerät, und eine Empfangsanordnung, die die übermittelten Daten empfangen und bestimmungsgemäß verarbeiten kann, umfaßt.

In zunehmendem Umfang werden zur Bargeldabhebung an Bankautomaten oder im bargeldlosen Zahlungsverkehr kleinformatige Karten verwendet, auf denen in geeigneter Weise personenbezogene Kreditkartendaten gespeichert sind. Ein typisches Beispiel hierfür sind Bankkarten zur bargeldlosen Zahlung bzw. zum Abheben von Bargeld an Bankautomaten.

Eine solche Karte wird üblicherweise in ein Kartenlesegerät eingeführt; die gelesenen Daten werden dann im Computersystem überprüft, wobei bei Akzeptanz der Karte ggf. noch eine Geheimnummer o.ä. eingegeben werden muß, bevor der mit der Karte einzuleitende Vorgang, wie Auszahlung von Bargeld oder Bezahlung von Waren eingeleitet wird.

Erfindungsgemäß wird ein Handgerät zum Aufzeichnen und Übermitteln von Kreditkartendaten gemäß Anspruch 1 vorgeschlagen; weitere Ausgestaltungen der Erfindung ergeben sich aus den nachfolgenden Ansprüchen 2 bis 10.

Gemäß Erfindung und anliegender Figur ist das Handgerät in handgerechter Bauweise ausgeführt, wie beispielsweise Mobiltelefone, sogenannte Handies. In dem Handgerät ist ein Datenspeicher 1 angeordnet, in dem die Kreditkartendaten gespeichert werden; diese Speicherung kann durch ein externes Einlesegerät, beispielsweise in der betreffenden Bank, über eine Schnittstelle 3 in den Speicher des Handgeräts eingelesen werden; andererseits kann das Handgerät selbst eine miniaturisierte Einlesestation 3 aufweisen, in die die Kreditkarte eingeführt wird, worauf über die Einlesestation 3 die auf der Karte gespeicherten Daten in einen Speicherbereich des Speichers 1 im Handgerät eingelesen werden; in diesem Fall kann die Karte dann entnommen und weggelegt werden.

Die eingelesenen Daten werden auf einen Befehl, der über ein Bedienungsfeld 4 des Handgeräts einzugeben ist, der Ausgabestation 2 des Gerätes zur Verfügung gestellt. Die Ausgabestation 2 ist bevorzugt ein Minisender für beispielsweise elektromagnetische Strahlung, Infrarotstrahlung oder andere Strahlung, für akustische Wellen o.ä., die geeignet sind, in analoger oder digitaler Form die ensprechend transformierten Daten zu transportieren.

Auf dem Bedienungsfeld 4, das bevorzugt in Form eines Displays mit Bedienungstasten oder Berührungsfeldern ausgebildet ist, sind jeweilige, dem eingelesenen Datensatz einer Karte zugeordnete Tasten vorgesehen, durch deren Aktivierung die Transformation der entsprechenden gespeicherten Daten in die abzugebende Strahlung und ihre Abgabe initiiert wird.

Die beispielsweise bei einem Bankautomaten übliche zusätzliche Eingabe eines Geheimcodes (üblich sind Zifferkombinationen) o.ä. zum Nachweis der individuellen Benutzungsberechtigung der Karte kann wie bisher eingegeben werden; sie kann aber auch in entsprechender Weise in dem Bedienungsfeld 4 des Geräts eingegeben und in beschriebener Weise abgesendet werden.

Es kann aber auch vorgesehen sein, daß dieser Geheimcode zusammen mit den übrigen Daten einer Karte, der bei verschiedenen Karten ggf. verschieden ist, eingelesen bzw. eingegeben wird; in diesem Fall muß der Benutzer nicht die einzelnen individuellen Geheimcodes je Karte, sondern nur einen, von ihm jederzeit wechselbaren Geheimcode über das Bedienungsfeld 4 eingeben, wobei diese Eingabe den Zugriff und Initiierung der jeweiligen Datensendung, einschließlich des jeweiligen Geheimcodes der betreffenden Karte, ermöglicht.

Die Empfangsvorrichtung 5 empfängt die in beschriebener Weise erzeugten und den Daten entsprechend modulierten Strahlen, transformiert sie in für das angeschlossene System lesbare Daten und löst die bestimmungsgemäße Reaktion des Systems aus, beispielsweise den Zugang zur Eingabe des gewünschten auszuzahlenden Betrages und dessen Auszahlung oder die Bezahlung von eingekauften Waren an der Kasse eines Kaufhauses oder die Herausgabe einer Ware.

Bevorzugt kann der nachfolgende Dialog mit dem System, dessen Zugang durch die Übermittlung der relevanten Kartendaten ermöglicht wird, ebenfalls über entsprechende Eingaben in das Bedienungsfeld 4 des erfindungsgemäßen Handgeräts erfolgen. Hierdurch ergibt sich unter anderem der Vorteil, daß, beispielsweise bei einem Bankautomaten, lediglich eine Geldausgabevorrichtung, beispielsweise ein üblicher Schlitz, dem Benutzer zugänglich ist, während ein Bedienungsfeld und eine Karteneingabeöffnung an dem Gerät völlig entfällt und damit auch nicht beschädigt werden kann, während die Empfangsvorrichtung 5 für den Benutzer des Bankautomaten nicht erreichbar, beispielsweise hinter einem Gitter o.ä. angeordnet ist. Bei Kassen mit einem Bedienungsfeld zur Eingabe von Geheimcodes bei Zahlungen mit Kreditkarten, wird das Bedienungsfeld ebenfalls überflüssig sein, wenn die Geheimcodes dieser Kreditkarten auf dem Handgerät gespeichert werden und sie über dessen Bedienungsfeld 4 der Empfangsvorrichtung der Kasse gesendet werden. Hiermit entfallen die Gefahr des Geheimcodeablesens durch Dritte und entsprechende Ängste der Bankkunden.

Das erfindungsgemäße Handgerät kann auch mit einer Lese- und/oder Speichervorrichtung eines Fingerabdrucks des Geräteinhabers ausgestattet sein, die derart in das Handgerät integriert sind, daß dessen funktionsgemäße Handhabung nur durch vorgeschaltete Identifizierung des Fingerabdrucks des Bedieners als dem des Geräteinhabers freigegeben wird; die dem Fingerabdruck entsprechenden Daten können ebenfalls, in Signale umgewandelt, drahtlos dem z.B. Bargeldautomaten übermittelt und, vor Bargeldausgabe, auf Übereinstimmung mit den bei der Bank gespeicherten Daten des gleichen Fingerabdrucks überprüft werden.

Das erfindungsgemäße Handgerät kann bevorzugt auch als Modul ausgebildet sein, so daß es modularer oder, besonders bevorzugt, auch integraler Bestandteil eines sogenannten Handys ist.

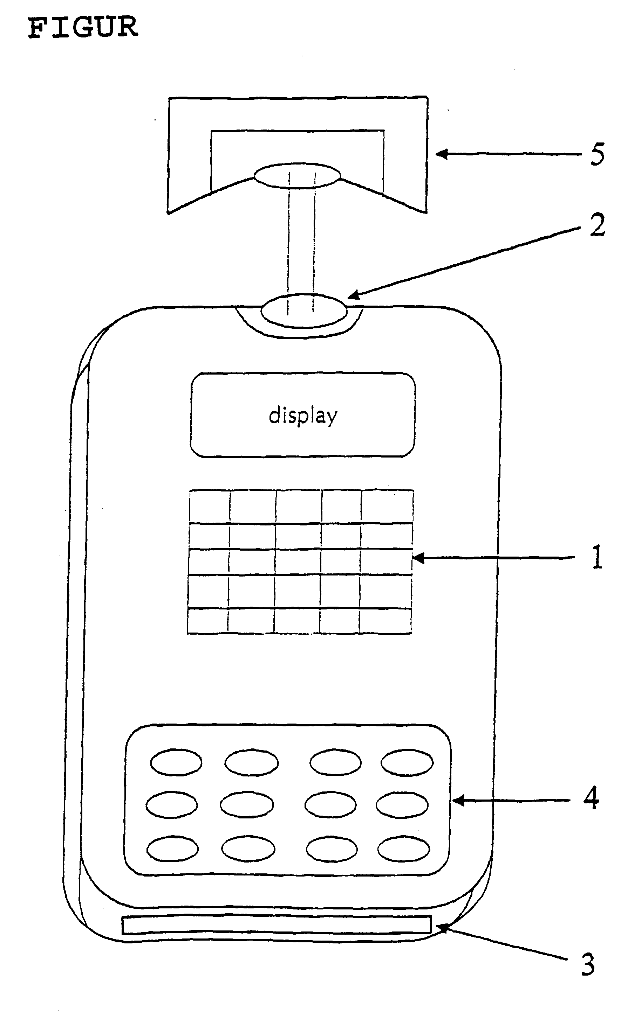

## Patentansprüche

1. Handgerät zum Aufzeichnen und Übermitteln von Kreditkartendaten, gekennzeichnet dadurch, daß es einen Datenspeicher, in dem Kreditkartendaten von einem Datenträger dieser Daten einlesbar sind, sowie eine Station zur Ausgabe dieser Daten und ein Bedienfeld zum Aktivieren des Ausgabevorgangs aufweist.

2. Handgerät nach Anspruch 1, dadurch gekennzeichnet, daß es eine Einlesestation zum Einlesen der Kreditkartendaten von einem Datenträger dieser Daten in den Datenspeicher innerhalb des Handgeräts aufweist.

3. Handgerät nach einem der vorhergehenden Ansprüche, dadurch gekennzeichnet, daß die Kreditkartendaten, die auf einer Bankkarte bzw. einer Karte zum bargeldlosem Bezahlen von Waren oder Dienstleistungen, gespeichert sind, in den Datenspeicher innerhalb des Handgeräts eingegeben oder über die Einlesestation (1) eingelesen sind.

4. Handgerät nach mindestens einem der vorhergehenden Ansprüche, dadurch gekennzeichnet, daß der Speicher voneinander getrennte Speicherbereiche aufweist, wobei jeweils in einem Speicherbereich der Datensatz eines bestimmten einzelnen Datenträgers gespeichert wird, und wobei dem jeweiligen Speicherbereich eine Kennung zugeordnet ist, die bei Eingabe in das Bedienfeld (4) den Ausgabevorgang der gespeicherten Daten über die Ausgabestation (2) initiiert.

5. Handgerät nach mindestens einem der vorhergehenden Ansprüche, dadurch gekennzeichnet, daß die Ausgabestation (2) ein Sender ist.

6. Handgerät nach Anspruch 5, dadurch gekennzeichnet, daß die Ausgabestation (2) ein Sender für elektromagnetische Strahlung ist.

7. Handgerät nach Anspruch 5, dadurch gekennzeichnet, daß die Ausgabestation (2) ein Sender für Infrarotstrahlung ist.

8. Handgerät nach mindestens einem der vorhergehenden Ansprüche in Verbindung mit einer Empfangsvorrichtung (5) für die von der Ausgabestation (2) ausgegebenen Daten, insbesondere der in Form von Signalen ausgesandten Daten durch einen der Sender gemäß Ansprüchen 5 bis 7.

9. Handgerät nach mindestens einem der Ansprüche 1 bis 7 in integrierter Kombination mit einem Handy.

10. System aus Handgeräten nach einem der Ansprüche 1 bis 7, 9 und einem Geldausgabe-Bankautomaten oder einer Kasse eines Kaufhauses, wobei Automat oder Kasse eine Empfangsstation zum Empfang und Identifizierung der vom Handgerät ausgesandten, den gespeicherten Kreditkartendaten entsprechenden Signalen aufweist.
